# EUROPEAN PATENT APPLICATION

(11) **EP 4 475 236 A1**
(43) Date of publication of application: **11.12.2024**
(21) Application number: 23178304.4
(22) Date of filing: 08.06.2023
(51) Int. Cl.: H01M 8/0232, H01M 12/08, H01M 50/403, H01M 50/417, H01M 50/426, H01M 50/44, H01M 50/451, H01M 50/454, H01M 50/46, H01M 50/497

(54) **SEPARATOR FOR A ZINC-ION BATTERY AND PROCESS FOR THE MANUFACTURE THEREOF**

(71) Applicant: HILABS GmbH, 71032 Böblingen (DE)
(72) Inventor: Haq, Manan, 70569 Stuttgart (DE)
(74) Representative: Meyer zu Bexten, Elmar

(57) **Abstract**

This invention pertains to the field of zinc-ion battery technology, specifically targeting issues related to dendrite formation and water corrosion. The proposed solution is a novel separator comprising a solid, impervious zinc-ion conductive membrane reinforced with synthetic fibers and incorporated with ion-conductive additives. The membrane, laminated onto a conventional separator, forms a multilayer structure enhancing battery safety and efficiency. The invention also includes the production process of the separator and its integration into a zinc-ion battery featuring a copper conductor with a protective polymeric film. A notable embodiment applies a layer of pure activated carbon onto a copper mesh current collector for the cathode. The invention finds principal use in battery manufacturing and sectors relying on advanced battery technology like consumer electronics, electric vehicles, and renewable energy storage.

## Description

### Technical Field

The invention relates to the products and process as per the prior art portion of the independent claims.

### Background Art

Despite the wide usage of lithium cells owing to their advanced development stage and energy density, they are posing challenges in terms of safety, environmental protection, and cost. Zinc-air battery technology has been proposed as a solution, which allows for the storage of solar and wind power generated in private households and thus contributes to the envisaged transition from carbon to sustainable energy sources.

For instance, the flow battery disclosed in PTL1 through PTL5 may serve as a cost-effective and scalable power storage solution for both stationary and mobile applications, leveraging air and low-cost zinc metal as storage media. Unlike conventional lithium-ion batteries, this technology does not involve the use of toxic materials in its production, thereby causing no harm to the environment during raw material extraction.

Its design allows the secondary cell to "breathe" oxygen from ambient air, which in turn induces a chemical reaction within the battery, generating electric power. Once its capacity is depleted, the liquid anode may be pumped out of the battery and "recharged" using renewable electricity. Valuable raw materials can easily be recovered after the battery's lifespan and reintroduced into the battery cycle.

A modular design as per PTL6 allows such cells to be assembled into different-sized battery stacks, ranging from photovoltaic home storage in the kW range to industrial storage with several 100 kW or MW range storage for peak load compensation.

### Summary of invention

The invention is set out in the appended set of claims.

### Technical Problem

The present invention addresses several technical problems associated with the construction and operation of zinc-ion batteries, more specifically concerning the stability, efficiency, and longevity of these batteries.

The first technical problem pertains to the formation of dendrites in zinc-ion batteries. The process of charging and discharging a zinc-ion battery typically results in the formation of zinc dendrites. These dendritic structures can bridge the gap between the anode and cathode, leading to short circuits and thus presenting a serious safety risk. This dendrite growth also results in uneven plating and stripping of zinc, thereby causing a reduction in battery capacity and limiting the battery's lifespan.

The second technical problem relates to the corrosion of the zinc anode. The water-based electrolytes used in zinc-ion batteries promote the corrosion of the zinc anode, causing degradation of the battery's performance over time. This corrosive process not only affects the stability and lifespan of the battery but also hinders the ion conductivity and subsequently, the overall energy efficiency of the battery.

The third technical problem involves the standard separators utilized in these batteries, which typically have insufficiently stable and effective barrier characteristics. While they might inhibit the growth of dendrites and prevent short circuits to a certain extent, they often fall short in guaranteeing the longevity and safety of the battery, particularly in cases of extreme charge and discharge cycles.

The fourth technical problem is related to the application of a protective layer on the zinc anode. Traditionally, protective layers are applied on the zinc anode to prevent dendrite formation and water corrosion. However, this approach has several limitations including inconsistent coverage of the protective layer, potential compatibility issues between the anode and protective layer, and reduced battery performance due to additional resistance introduced by the layer.

Thus, the overall technical problem addressed by the present invention is to provide a separator for zinc-ion batteries that not only effectively inhibits dendrite growth and water corrosion of the zinc anode, but also maintains optimal ion conductivity and battery performance, while ensuring consistent and efficient protection of the anode. The present invention also aims to offer an improved method for manufacturing such a separator and its integration into a zinc-ion battery.

### Solution to Problem

This problem is solved as per the characterizing portion of the independent claims.

### Advantageous effect of invention

The present invention, by way of its unique design and arrangement, yields advantageous effects that significantly alleviate the issues elucidated above, providing improved performance, safety, and longevity in the field of zinc-ion batteries.

Firstly, the use of a solid, impervious zinc-ion conductive membrane in the separator considerably mitigates the risk of dendrite formation. The non-porous membrane effectively prevents the proliferation of dendrites, thereby substantially reducing the potential for short-circuits, improving the safety profile of the battery, and enhancing the overall lifespan of the battery by maintaining a stable anode surface over numerous charging and discharging cycles.

Secondly, the presence of this solid, ion-conductive membrane effectively combats the problem of water corrosion of the zinc anode. The membrane acts as a protective shield for the anode, preventing direct contact with water-based electrolytes, thus reducing the potential for corrosive damage and thereby enhancing the durability of the battery.

Thirdly, the membrane, composed of a thermoplastic synthetic resin with semi-crystalline properties, imparts high mechanical stability to the separator, while still maintaining its ion conductivity. This results in a separator that not only exhibits a high level of resistance to mechanical stress, but also retains efficient ion transport, thereby maintaining high battery performance over its lifespan.

The inclusion of ion-conductive additives such as zinc salts or silicon derivatives within the membrane further enhances the ion conductivity of the separator, resulting in improved overall battery efficiency. The possible reinforcement of the membrane with synthetic fibers, like glass fibers, adds to the structural robustness of the separator, imparting superior durability and stability.

Another significant advantage is achieved by the multi-layer structure of the separator, which provides an additional barrier against dendrite formation and water corrosion, while simultaneously allowing for effective ion transport.

The innovative manufacturing process of the membrane, involving its creation in roll form and subsequent lamination onto a conventional separator, enables a cost-effective and efficient production, providing a high degree of uniformity and control over the separator's thickness and properties.

Lastly, the provision of a protective layer on a copper conductor, instead of the zinc anode, offers a novel and effective method for protecting the anode. This alternative approach overcomes limitations associated with applying a protective layer directly on the zinc anode, delivering enhanced consistency in coverage, improved compatibility, and reduced resistance, thereby bolstering battery performance.

In conclusion, the present invention, through its novel approach to the construction and manufacturing of a separator for zinc-ion batteries, provides a plethora of beneficial effects, notably enhanced safety, improved efficiency, and extended lifespan, offering substantial advances in the field of battery technology.

### Description of embodiments

The following description offers detailed insight into a preferred embodiment of the present invention, which encompasses the construction of the separator for a zinc-ion battery, and the integration of this separator into the battery.

The separator's distinguishing feature is a zinc-ion conductive membrane, which is solid and impervious to fluids. This membrane is constructed from a semi-crystalline thermoplastic synthetic resin, which can include materials such as polyamide (PA), polyethylene (PE), a polyaryletherketone like polyether ether ketone (PEEK), or a fluoropolymer such as poly(vinylidene fluoride-co-hexafluoropropylene) (PVDF-HFP). These materials not only provide the membrane with mechanical stability but also impart ion-conductive properties.

The membrane contains ion-conductive additives to further enhance its ion conductivity. The additives may comprise zinc salts, silicon derivatives, or other conceivable ion-conductive substances. These additives are incorporated into the resin during the membrane manufacturing process to ensure uniform dispersion, optimizing the ion conductivity of the final membrane product.

Additionally, the membrane may be reinforced with synthetic fibers, such as glass fibers, to augment the membrane's mechanical strength and stability. The incorporation of these fibers is also achieved during the manufacturing process.

The membrane displays a thickness between 20 µm and 200 µm, and its dimensions are maintained using a doctor blading process. The membrane, preferably produced in roll form, can be efficiently laminated onto a conventional separator, forming a multi-layer structure that further fortifies the separator's barrier properties.

The separator, thus produced, can be effectively integrated into a zinc-ion battery. The battery additionally comprises a copper conductor, such as a copper foil, which bears a protective polymeric film. The film may be of a multilayered construction, preferably sandwich-structured, enhancing the protection of the anode from dendrite formation and water corrosion.

### Example

A solution of poly(vinylidene fluoride-co-hexafluoropropylene) in an appropriate solvent is prepared. A zinc salt such as zinc sulfate heptahydrate and silicon dioxide or another suitable silicon derivative are added to this solution as ion-conductive additives. Additionally, glass fibers are incorporated into the solution to provide reinforcement.

This mixture is uniformly spread onto a substrate using a doctor blade, with the blade gap set to achieve a desired membrane thickness of 100 µm. The coated substrate is subsequently heated to evaporate the solvent, leaving behind a solid, non-porous zinc-ion conductive membrane. The membrane displays outstanding ion conductivity due to the incorporation of the ion-conductive additives, and superior mechanical stability due to the glass fiber reinforcement.

The resulting membrane is then laminated onto a conventional polyethylene separator using a heat lamination process, thereby creating a multi-layer separator structure.

Concurrently, a cathode is prepared by applying a layer of pure activated carbon onto a copper mesh current collector. This cathode structure ensures efficient electron transfer and high electrochemical activity, due to the high surface area of the activated carbon and the excellent conductivity of the copper mesh.

The prepared separator is subsequently integrated into a zinc-ion battery, positioned between a zinc anode and the cathode with pure activated carbon applied to the copper mesh current collector. The copper mesh, bearing the activated carbon, is previously coated with a multilayered protective polymeric film, serving as an additional barrier against dendrite formation and water corrosion.

This specific embodiment illustrates the successful application of the invention's concepts to construct a separator with enhanced ion conductivity and superior protection against dendrite formation and water corrosion. The result is a zinc-ion battery with improved efficiency, safety, and longevity, particularly suited to applications that benefit from the high electrochemical activity of an activated carbon cathode.

### Industrial applicability

The present invention, relating to the novel design of a separator for zinc-ion batteries and the method of its production, is eminently susceptible to industrial application due to the numerous attributes it presents which are relevant and valuable to the battery manufacturing industry and various sectors that rely heavily on battery technology.

In the manufacturing industry of batteries, especially zinc-ion batteries, the invention offers significant benefits. The innovative method of producing a solid, impervious zinc-ion conductive membrane and its subsequent integration into the separator addresses prevalent issues related to dendrite growth and water corrosion in zinc-ion batteries. By incorporating ion-conductive additives and optionally reinforcing with synthetic fibers, the separator exhibits enhanced ion conductivity and mechanical stability, factors that contribute to improved battery performance and safety. The manufacturing process, involving the creation of the membrane in roll form and subsequent lamination onto a conventional separator, is designed to be efficient, scalable, and compatible with existing production lines, hence favoring industrial adoption.

Furthermore, the invention's potential applications span across a broad range of sectors that depend on efficient and reliable battery technology. These sectors include consumer electronics, where zinc-ion batteries with enhanced safety and longevity can significantly improve the performance and durability of devices such as smartphones, laptops, and wearable technology. In the burgeoning electric vehicle industry, the enhanced safety and longevity of batteries can significantly increase the driving range and lifespan of electric vehicles, addressing two major challenges in this field.

In the realm of renewable energy, especially in solar and wind energy systems, the invention can enhance the efficiency and reliability of energy storage systems, thereby promoting the feasibility and sustainability of these renewable energy sources. In grid-scale energy storage, the improved safety, efficiency, and longevity of batteries can contribute significantly to the reliability and cost-effectiveness of energy storage, thereby facilitating the integration of renewable energy into the grid and enhancing grid stability.

In conclusion, the current invention, with its myriad benefits and wide range of applications, is distinctly suited to industrial application, offering substantial advancements and opportunities for the battery manufacturing industry and various sectors that rely on advanced battery technology.

### Citation list

The following documents are cited hereinbefore.

### Patent literature

PTL1: WO 2019/154516 A (HILABS GMBH) 15.08.2019
PTL2: EP 3321990 B (HILABS GMBH) 09.10.2019
PTL3: US 11367915 B (HILABS GMBH) 21.06.2022
PTL4: JP 7138364 B (HILABS GMBH) 16.09.2022
PTL5: CN 111819710 B (HILABS GMBH) 04.04.2023
PTL6: EP 4080647 A (HILABS GMBH) 26.10.2022

### Non-patent literature

NPL1: LI, Changgang, et al. Cathode materials for rechargeable zinc-ion batteries: From synthesis to mechanism and applications. Journal of Power Sources. 15.02.2020, vol.449.

## Claims

1. Separator for a zinc-ion battery,
**characterized in**
a preferably solid zinc-ion conductive membrane.

2. Separator as per Claim 1,
**characterized in that**
the membrane is impervious to fluids, such as a film.

3. Separator as per Claim 1 or Claim 2,
**characterized in that**
the membrane exhibits a thickness between 20 µm and 200 µm.

4. Separator as per any of the preceding claims,
**characterized in that**
the membrane contains a thermoplastic synthetic resin.

5. Separator as per Claim 4,
**characterized in that**
the resin is semi-crystalline.

6. Separator as per Claim 5,
**characterized in that**
the resin is polyamide, polyethylene, a polyaryletherketone such as polyether ether ketone, or a fluoropolymer such as poly(vinylidene fluoride-co-hexafluoropropylene).

7. Separator as per Claim 4, Claim 4, or Claim 6,
**characterized in that**
the membrane contains an ion-conductive additive.

8. Separator as per Claim 7,
**characterized in that**
the additive is ion-conductive such as a zinc salt or silicon derivative.

9. Separator as per any of the preceding claims,
**characterized in that**
the membrane is reinforced with a synthetic fiber such as glass fiber.

10. Separator as per any of the preceding claims,
**characterized in that**
the separator exhibits multiple layers.

11. Process for manufacturing a separator as per Claim 10 from a
conventional separator,
**characterized in**
manufacturing the membrane, preferably in rolls, and
laminating the membrane on the conventional separator such that it forms one of the layers.

12. Process as per Claim 11,
**characterized in that**
thickness of the membrane is controlled by means of doctor blading.

13. Zinc-ion battery
**characterized in**
a separator as per any of Claim 1 through Claim 10.

14. Battery as per Claim 13,
**characterized in**
a copper conductor, such as a foil, having a polymeric protective film.

15. Battery as per Claim 14,
**characterized in that**
the film is multilayered, preferably sandwich structured.
